(19) Europäisches Patentamt
European Patent Office
Office européen des brevets

(11) EP 0 264 903 B1

(12) EUROPEAN PATENT SPECIFICATION

(45) Date of publication and mention of the grant of the patent:
**10.04.1996 Bulletin 1996/15**

(51) Int Cl.$^6$: **C08F 220/12**
// (C08F220/12, 222:02)

(21) Application number: **87115327.6**

(22) Date of filing: **20.10.1987**

(54) **Rubbery acrylic polymer, latex and preparation thereof**

Gummiartiges Acryl-Polymer, Latex und seine Herstellung

Polymère acrylique gommeux, latex et sa préparation

(84) Designated Contracting States:
**ES GR**

(30) Priority: **20.10.1986 WOPCT/US86/02252**

(43) Date of publication of application:
**27.04.1988 Bulletin 1988/17**

(73) Proprietor: **THE B.F. GOODRICH COMPANY**
**Akron Ohio 44313-1799 (US)**

(72) Inventor: **Stanislawczyk, Vic**
**Sheffield Lake Ohio 44054 (US)**

(74) Representative:
**von Kreisler, Alek, Dipl.-Chem. et al**
**Patentanwälte**
**von Kreisler-Selting-Werner**
**Postfach 10 22 41**
**D-50462 Köln (DE)**

(56) References cited:
**US-A- 4 406 660**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 264 903 B1

## Description

### BACKGROUND OF THE INVENTION

There are many patents and publications on latexes, polymers thereof and articles made therefrom. This invention is particularly directed to a process for preparing a latex composition containing a polymer having an excellent balance of properties such as low temperature flexibility, "softness", good resistance to light and oxidation, a good combination of tensile strength and elongation, and excellent hysteresis characteristics. The major class of latexes is acrylic latexes.

Conventional acrylic latexes containing polymers of interpolymerized units of an acrylate acid ester(s), up to major amounts of other copolymerizable monomers, an unsaturated carboxylic acid such as acrylic acid, and a crosslinking monomer such as N-alkylol acrylamide are well known. The polymers can be used in the form of a latex, or the polymers can be isolated from the latex by coagulation and drying. The latex form can be conveniently used to make paints, or it can be used as a binder for nonwovens or for treatment of paper and other materials.

There are many examples of acrylic latexes in the art. U.S. -A- 2,757,106; 3,231,533; 3,539,434; and 4,501,289 are but a few examples of such patents. More particularly, patents which recite or disclose acrylic latex polymers containing interpolymerized units of unsaturated dicarboxylic acids such as itaconic acid are more relevant to the present invention. Examples of such patents are U.S. -A- 2,754,280; 3,714,078; 4,071,650; 4,181,769; 4,268,546; 4,289,823; 4,291,087; 4,351,875; 4,406,660; and 4,455,342. However, these references either do not distinguish the use of dicarboxylic versus monocarboxylic acids, or they do not disclose the unique and improved polymers produced herein using the dicarboxylic acids. Prior to this invention, low Tg, soft acrylic polymers exhibited basically a poor balance of tensile strength and elongation properties and inadequate hysteresis characteristics. This is not surprising as normally there is a "trade-off" between good low temperature properties such as low temperature flexibility and good strength properties. The polymers of this invention exhibit a much improved balance of properties in this regard. Particularly, the novel polymers are basically low Tg, soft acrylic polymers that have a good balance of tensile strength and elongation and excellent hysteresis characteristics as shown by a low percent hysteresis loss.

### SUMMARY OF THE INVENTION

The invention pertains to a process for preparing a latex comprising water, 0.1 to 10 parts by weight of a surfactant, and a polymer having a Tg of from -20°C to -60°C, a percent hysteresis loss of less than 15%, and a raw polymer tensile strength of at least 2.068 MPa (300 psi) and an elongation of at least 350 percent, comprising interpolymerized units of (a) from 1 to 20 weight parts of at least one unsaturated dicarboxylic acid containing 4 to 10 carbon atoms (b) from 70 to 99 weight parts of at least one copolymerizable monomer of which a majority is an acrylate monomer(s), and (c) optionally, from 0.1 to 10 weight parts of a crosslinking monomer, all weights based on 100 parts by weight total of all monomers, which process includes the step of metering into a reactor a premix which substantially comprises water, at least one copolymerizable monomer, optionally a crosslinking monomer(s), surfactant and up to one-half of the total amount of at least one unsaturated dicarboxylic acid, wherein the reactor contains water, initiator, and at least one-half of the total amount of at least one unsaturated dicarboxylic acid, and subsequently conducting polymerization in the reactor at a temperature from 0°C to 100°C.

The polymers in these latexes have a unique and improved balance of properties. The novel polymers are low Tg, soft acrylic polymers that have a good balance of tensile strength and elongation and excellent hysteresis characteristics. They are rubbery, tough, and highly resilient, and exhibit tensile strength and elongation properties common in some "harder" acrylic polymers.

The latexes can be prepared by polymerizing the monomers and other ingredients using a premix of the monomers which is metered into a reactor containing initiator. However, a preferred process is to prepare a premix in the usual manner but devoid of all or a substantial part of the unsaturated dicarboxylic acid, and add the unsaturated dicarboxylic acid initially to the reactor before metering the premix into the reactor.

### DETAILED DESCRIPTION OF THE INVENTION

The latexes which are prepared according to the process of the present invention disclosed herein are useful as coatings or binders for nonwovens to yield articles that have unique properties, or the polymer can be isolated from the latex and used to make films and articles having unique properties. The polymers exhibit a unique and improved balance of properties. They have excellent low temperature flexibility and yet exhibit a good balance of tensile strength and elongation and excellent hysteresis characteristics. More specifically, the polymers have an improved balance of high resilience, rubberyness, toughness, low surface tack considering their softness, heat and light stability, dry and wet and solvent strength, and low temperature flexibility. Certain properties of the polymers are comparable to those of some much harder acrylate polymers. For example, the polymers exhibit abrasion resistance comparable to harder acrylate

polymers. However, the polymers exhibit rubbery behavior when compared to the more plastic behavior observed with harder acrylate polymers. Prior to this invention, low Tg, soft acrylic polymers basically exhibited a poor balance of tensile strength and elongation properties and inadequate hysteresis characteristics. The polymers exhibit a much improved balance of properties in this regard. Particularly, the polymers are low Tg, soft acrylic polymers that have a good balance of tensile strength and elongation and excellent hysteresis characteristics as shown by a low percent hysteresis loss.

The latexes disclosed herein are prepared by polymerizing at least one unsaturated dicarboxylic acid containing 4 to 10 carbon atoms, with at least one copolymerizable monomer in the presence of an initiator and a surfactant. Optionally, a crosslinking monomer can be interpolymerized with the unsaturated dicarboxylic acid(s) and the copolymerizable monomer(s). The total amount of all of the monomers charged to the reactor, whether batchwise, incrementally, and/or metered in, equals 100 parts by weight.

The use of unsaturated dicarboxylic acids is critical to the invention. The use of monocarboxylic acids such as acrylic acid or methacrylic acid does not produce the unique balance of properties in the polymer. The unsaturated dicarboxylic acids used in the invention contain 4 to 10 carbon atoms per molecule. Especially suitable dicarboxylic acids are those containing 4 to 6 carbon atoms such as itaconic acid, citraconic acid, mesaconic acid, glutaconic acid, fumaric acid and maleic acid..; The anhydrides of such acids are also useful, such as maleic anhydride. The more preferred unsaturated dicarboxylic acids are itaconic acid and fumaric acid. The most preferred unsaturated dicarboxylic acid in terms of performance is itaconic acid.

The amount of the unsaturated dicarboxylic acid employed is from 1 part to 20 parts by weight, and more preferably from 2 parts to 8 parts by weight. The use of the unsaturated dicarboxylic acids in amounts above 8 parts by weight necessitates suitable adjustments in polymerization ingredients due to a destabilizing effect of the acid and some retardation of the polymerization. For example, in an experiment where 8 weight parts of itaconic acid was charged initially into the reactor using the same amount of surfactant and initiator that gave good results when 4 weight parts of itaconic acid was used, the resulting latex had a high residual monomer content which caused some difficulty in forming an even or level film. When 20 weight parts of itaconic acid was charged initially into the reactor, a latex was formed but the residual monomer level was quite high. In such cases the polymerization conditions and ingredients can be readily adjusted to obtain latexes with acceptable amounts of residual monomers. This can be done by increasing the amounts of surfactant and/or initiator used, by increasing the temperature of polymerization, by metering in part of the unsaturated dicarboxylic acid, by stripping the latex, or combinations of the above. Excellent results have been obtained using 3 to 6 parts by weight of the unsaturated dicarboxylic acid.

The polymers of the latex prepared according to this invention are interpolymers of (a) at least one of the above-described unsaturated dicarboxylic acids with (b) at least one copolymerizable monomer and (c) optionally, a crosslinking monomer(s). Hence, a polymer may be an interpolymer as simple in structure as a copolymer of 95% by weight n-butyl acrylate and 5% by weight itaconic acid. However, the polymers are more likely to contain interpolymerized units of more than two monomers.

The copolymerizable monomer(s) used in this invention can be any unsaturated monomer capable of interpolymerizing with the unsaturated dicarboxylic acid. The amount of copolymerizable monomer employed is such that the weight parts of the unsaturated dicarboxylic acid(s), and the crosslinking monomer(s), if used, together with the weight parts of the copolymerizable monomer(s) used total up to one hundred (100) weight parts. For example, a copolymer of the invention containing 4 parts by weight of an unsaturated dicarboxylic acid and 2 parts by weight of a crosslinking monomer would then contain 94 parts by weight of a copolymerizable monomer(s). Since all the monomers are charged on a 100 weight parts total basis, and the conversions in the latex reaction typically reach substantial completion, the weight parts of monomer charged substantially equals the weight percent of the interpolymerized monomer in the final polymer. If this is not the case, the use of conventional analytical techniques readily establishes the weight percent of any interpolymerized monomer in the polymer. Typically, the total amount of copolymerizable monomer(s) charged into the reactor is at least 70 parts by weight, and more typically at least 90 parts by weight of the total weight of all monomers.

Examples of the copolymerizable monomers are alkyl, alkoxyalkyl, alkylthioalkyl, and cyanoalkyl acrylates and methacrylates containing 1 to 20 carbon atoms in the alkyl group; diacrylates and dimethacrylates such as ethyleneglycol dimethacrylate and diethylene glycol diacrylate; monolefins containing 2 to 10 carbon atoms such as ethylene, propylene, isobutylene, 1-hexene, 1-octene; vinyl and allyl acetates containing 4 to 20 carbon atoms such as vinyl acetate, vinyl propionate, allyl acetate; vinyl ketones containing 4 to 20 carbon atoms such as methyl vinyl ketone; vinyl and allyl ethers containing 4 to 20 carbon atoms such as vinyl methyl ether, vinyl ethyl ether, vinyl-n-butyl ether, allyl methyl ether; vinyl aromatics containing 8 to 20 carbon atoms such as styrene, α-methyl styrene, p-n-butyl styrene, p-n-octyl styrene, vinyl toluene; vinyl nitriles containing 3 to 6 carbon atoms such as acrylonitrile and methacrylonitrile; vinyl amides containing 4 to 20 carbon atoms such as acrylamide, methacrylamide, N-methyl methacrylamide; and dienes and divinyls containing 4 to 20 carbon atoms such as butadiene, isoprene, divinyl benzene, divinyl ether; monomers of 2 to 20 carbon atoms containing a halogen group such as vinyl chloride, vinyl bromide, vinylidene chloride, vinyl benzyl chloride, vinyl benzyl bromide, vinyl chloroacetate, allyl chloroacetate, 2-chloroethyl acrylate, chloroprene; unsaturated sulfonate monomers

such as sodium styrene sulfonate, vinyl sulfonate; unsaturated carboxylic ester and amide monomers containing 4 to 20 carbon atoms such as dimethyl fumarate, dibutyl itaconate, the half-ethyl ester of itaconic acid; and unsaturated monocarboxylic acids containing 3 to 5 carbon atoms such as acrylic acid, methacrylic acid.

The two conditions on the selection of the copolymerizable monomer(s) are (1) that the glass transition temperature (Tg) of the polymer made is from -20°C. to -60°C., and more preferably from -25°C., to -50°C. and (2) that the copolymerizable monomer(s) contains a major portion of an acrylate monomer(s).

The acrylate monomer empolyed is an alkyl, alkoxyalkyl, alkylthioalkyl, or cyanoalkyl acrylate of the formula

$$CH_2 = \overset{\overset{\displaystyle Ra}{|}}{C} - \overset{\overset{\displaystyle O}{\|}}{C} - O - R^1$$

wherein Ra is hydrogen or methyl, and $R^1$ is an alkyl radical containing 1 to 20 carbon atoms, an alkoxyalkyl or alkylthioalkyl radical containing a total of 2 to 12 carbon atoms, or a cyanoalkyl radical containing 2 to 12 carbon atoms. The alkyl structure can contain primary, secondary, or tertiary carbon configurations. Examples of such acrylates are methyl acrylate, ethyl acrylate, propyl acrylate, n-butyl acrylate, isobutyl acrylate, n-pentyl acrylate, isoamyl acrylate, n-hexyl acrylate, 2-methyl pentyl acrylate, n-octyl acrylate, 2-ethylhexyl acrylate, n-decyl acrylate, n-dodecyl acrylate, n-octadecyl acrylate; methoxymethyl acrylate, methoxyethyl acrylate, ethoxyethyl acrylate, butoxyethyl acrylate, ethoxypropyl acrylate, methylthioethyl acrylate, hexylthioethylacrylate; and α and β-cyanoethyl acrylate, α, β and α-cyanopropyl cyanobutyl, cyanohexyl, and cyanooctyl acrylate, and the like; n-butyl methacrylate, 2-ethylhexyl methacrylate, isodecyl methacrylate, octadecyl methacrylate. Mixtures of two or more acrylate monomers are readily employed.

Preferably, the copolymerizable monomer(s) used contains from forty percent (40%) up to one hundred percent (100%) by weight of acrylates of the above formula. The most preferred alkylate monomer(s) are those wherein Ra is hydrogen and $R^1$ is an alkyl radical containing 4 to 10 carbon atoms or an alkoxyalkyl radical containing 2 to 8 carbon atoms. Examples of the most preferred acrylates are n-butyl acrylate, hexyl acrylate, 2-ethylhexyl acrylate, and methoxyethyl acrylate, ethoxyethyl acrylate. Both an alkyl acrylate and an alkoxyalkyl acrylate can be used. Excellent results have been obtained when the acrylate monomer(s) employed is the most preferred acrylate monomer(s) and such monomer(s) comprises about seventy-five percent (75%) to one hundred percent (100%) of the copolymerizable monomer.

The two criteria on the selection of the copolymerizable monomer such that the polymer has a low Tg and contains a major portion of interpolymerized acrylate monomer(s) are somewhat complementary in that the use of a high level of the preferred acrylate monomer(s) as the copolymerizable monomer readily yields a polymer having the required Tg value. It is understood that the polymers can have more than one Tg value within the prescribed Tg range.

The Tg of a polymer can be easily determined using differential thermal analysis. Further, the Tg of a polymer is predictable from the interpolymerized monomers using known formulas and readily obtainable data following the procedure and teachings given in many publications. One such publication is the book Mechanical Properties of Polymers by L. E. Nielsen, Reinhold Publishing Corp. (1967) Library of Congress catalog card no. 62-18939. Chapter 2 is devoted to transitions in polymers, and the tables given on pages 16 to 24 list out the Tg values of many polymers, including acrylate polymers, based on the monomers employed.

Hence, the Tg of the polymers can be determined through knowledge of the types and amounts of copolymerizable monomers employed. However, from the aforementioned list of copolymerizable monomers, it is apparent that some of the monomers cannot be used in large amounts and yet make a polymer meeting the necessary criteria. For example, the "hard" copolymerizable monomers; i.e. those which would yield a homopolymer Tg value of +80°C. or above, would typically be used in amounts of from 0 percent to 25 percent by weight of the total weight of the copolymerizable monomers. Examples of such hard monomers are the vinyl aromatics such as styrene, α-methyl styrene, vinyl toluene; vinyl nitriles such as acrylonitrile and methacrylonitrile; and monomers containing a halogen group such as vinyl chloride, vinylidene chloride, vinyl benzyl chloride. Further, certain of the copolymerizable monomers have an activity which, if the monomers were present in large amounts, could overshadow the features of the polymers of this invention. Hence, copolymerizable monomers such as the vinyl amides, the diacrylates and dimethacrylates, the unsaturated sulfonate monomers, and the unsaturated monocarboxylic acids would typically be used in amounts of from 0 percent to 5 percent by weight of the total weight of the copolymerizable monomers.

The polymers do not require the presence of a crosslinking monomer to achieve their unique properties. However, many uses of the polymers benefit from the presence of a crosslinking monomer in the polymer or the addition of a crosslinking agent to the polymer.

The crosslinking monomers used herein can be any monomer or oligomer polymerizable with the unsaturated dicarboxylic acid and copolymerizable monomer which exhibits crosslinking or which can be converted into a crosslinking site. An example of a crosslinking monomer which can be interpolymerized with the unsaturated dicarboxylic acid and copolymerizable monomer, and then converted to yield a crosslinking site is acrylamide, which, when treated with formaldehyde, forms a methylol group. The more preferred crosslinking monomers are monoethylenically unsaturated monomers containing N-methylol groups such as N-methylol acrylamide, or N-methylol derivatives of allyl carbamate

which may contain one or two N-methylol groups. The N-methylol groups may be left unreacted or they may be etherized, as with $C_1$ to $C_4$ carbon alcohols. The alcohol is released on curing to regenerate the N-methylol group for cure. Alcohol etherifying agents are illustrated by methyl alcohol, ethyl alcohol, isopropyl alcohol, isobutyl alcohol, 2-ethoxyethanol, and 2-butoxy ethanol.

More particularly, the preferred crosslinking monomers are selected from N-alkylol acrylamides that contain from 4 to 18, preferably 4 to 12 carbon atoms in the alkyl group, and lower alkyl acrylamidoglycolate lower alkyl ethers containing from 7 to 20 carbon atoms. Specific examples of the particularly preferred crosslinking monomers include N-methylol acrylamide, N-methylol methacrylamide, N-butoxymethyl acrylamide, iso-butoxymethyl acrylamide and methyl acrylamidoglycolate methyl ether. Especially good results have been obtained using N-methylol acrylamide as the crosslinking monomer.

The crosslinking monomer is used in the range from 0.1 to 10 parts by weight, and more preferably from 0.5 to 5 parts by weight based on 100 parts by weight total of all monomers.

If a crosslinking monomer is not interpolymerized with the unsaturated dicarboxylic acid and the copolymerizable monomer, the novel polymer can still be crosslinked by the post-polymerization addition of a crosslinking agent to the latex or the polymer. Examples of such crosslinking agents are urea-formaldehyde resins, melamine-formaldehyde resins and partially methylolated melamine-formaldehyde resins, glyoxal resins. These crosslinking agents can be used in levels of from 0.1 part to 20 parts, and more preferably from 0.5 part to 2 parts, by weight, based on 100 parts by weight of polymer.

The polymers are prepared as latexes. As the polymers have great utility used in the form of a latex, the latexes themselves are unique.

The aqueous medium in which the polymers are prepared may be free of traditional emulsifiers, or it may contain traditional emulsifiers. When traditional emulsifiers are used to prepare the unique latexes the standard types of anionic and nonionic emulsifiers can be employed. Useful emulsifiers include alkali metal or ammonium salts of the sulfates of alcohols having from 8 to 18 carbon atoms such as sodium lauryl sulfate, ethanolamine lauryl sulfate, and ethylamine lauryl sulfate; alkali metal and ammonium salts of sulfonated petroleum and paraffin oils; sodium salts of sulfonic acids such as dodecane-1-sulfonic acid and octadiene-1-sulfonic acid; aralkyl sulfonates such as sodium isopropyl benzene sulfonate, sodium dodecyl benzene sulfonate and sodium isobutyl naphthalene sulfonate; alkali metal and ammonium salts of sulfonated dicarboxylic acid esters such as sodium dioctyl sulfosuccinate and disodium-N-octadecyl sulfosuccinate; alkali metal or ammonium salts of the free acid of complex organic amon-and diphosphate esters; copolymerizable surfactants such as vinyl sulfonate. Nonionic emulsifiers such as octyl- or nonylphenyl polyethoxyethanol may also be used. Latexes having excellent stability are obtained using the alkali metal and ammonium salts of aromatic sulfonic acids, aralkyl sulfonates, long chain alkyl sulfonates and poly(oxyalkylene) sulfonates as emulsifiers.

The emulsifier or a mixture thereof may be added entirely at the outset of the polymerization or it may be added incrementally or metered throughout the run. Typically, some of the emulsifier is added to the reactor at the outset of the polymerization and the remainder is charged incrementally or proportionately to the reactor as the monomers are proportioned.

The polymerization of the monomers may be conducted at temperatures from 0°C up to 100°C in the presence of a compound capable of initiating the polymerizations. Initiating compounds and mixtures thereof are chosen, often in conjunction with oxidation-reduction catalysts, in an amount and type which results in a suitable initiation rate at a chosen polymerization temperature profile. Commonly used initiators include the free radical initiators like the various peroxygen compounds such as persulfates, benzoyl peroxide, t-butyl diperphtahlate, pelargonyl peroxide and 1-hydroxycyclohexyl hydroperoxide; azo compounds such as azodiisobutyronitrile and dimethylazodiisobutyrate. Particularly useful initiators are the water-soluble peroxygen compounds such as hydrogen peroxide and sodium, potassium and ammonium persulfates used by themselves or in activated systems. Typical oxidation-reduction systems include alkali metal persulfates in combination with a reducing substance such as polyhydroxyphenols, oxidizable sulfur compounds such as sodium sulfite or sodium bisulfite, reducing sugars, dimethylamino propionitrile, diazomercapto compounds, water-soluble ferricyanide compounds. Heavy metal ions may also be used to activate persulfate catalyzed polymerizations.

The amount of surfactant used is from 0.01 to 10 parts by weight, and the amount of initiator used is from 0.01 to 1.5 parts by weight, both based on 100 weight parts of the total amount of monomers.

Polymer latexes prepared according to the process of the invention having excellent stability are obtained using an alkali metal and ammonium persulfate as the initiator. The initiator may be charged completely into the reactor at the outset of the polymerization, or incremental addition or metering of the -initiator throughout the polymerization may also be employed. Addition of the initiator throughout the polymerization is often advantageous in providing a suitable rate throughout the polymerization.

The novel acrylic latexes can be made in different ways. In a one process, a premix is prepared by mixing the monomers, optionally with water, a surfactant or a mixture thereof, buffering agents, modifiers and the like. If water is used, the aqueous premix is agitated to form an emulsion. Separately added to a reactor are more water, the initiator, and optional ingredients. The premix is then metered into the reactor and the monomers are polymerized.

In a variation on the above process, part of the premix can be added to the reactor, the initiator is then added and polymerization of the initial monomers in the reactor thereto is allowed to form seed polymer particles. Thereafter, the remainder of the premix or another premix is metered into the reactor and the polymerization reaction is concluded in the usual way. In yet another variation, the premix can be fed to the reactor incrementally rather than continuously. Finally, in yet another variation of the process, all of the monomers and other ingredients can be added directly to the reactor and polymerization conducted in a known manner. This last variation is typically called a batch process. Monomers can also be added to the reactor in separate streams other than in the premix.

In a preferred embodiment of the process for preparing a latex of the invention, 2 to 8 weight parts of the unsaturated dicarboxylic acid such as itaconic acid is polymerized in water with 90 to 98 weight parts of an alkyl acrylate monomer such as n-butyl acrylate and 0.5 to 5 weight parts of a crosslinking monomer such as N-methylol acrylamide, in the presence of 0.1 to 5 weight part of a suitable surfactant such as sodium lauryl sulfate and 0.01 to 1.5 weight parts of a suitable initiator such as sodium persulfate.

The unsaturated dicarboxylic acid can be added all initially into the reactor before metering of the premix is commenced, or part or all of the said acid can be metered into the reactor during polymerization. In a preferred embodiment of the process, the unsaturated dicarboxylic acid is all initially added to the reactor, and the premix containing the copolymerizable monomer(s) and crosslinking monomer(s) is metered into the reactor. The best balance of polymer physical properties was obtained when all of the unsaturated dicarboxylic acid was added initially to the reactor. However, as compared to similar polymers made using monocarboxylic acids only, polymers having an improved balance of properties are also obtained when some or all of unsaturated dicarboxylic acid is added to the premix.

As already noted, processes for preparing acrylic latexes usually involve a number of stages. A premix is typically prepared containing one or more monomers, optionally surfactant, water and ingredients such as buffering agents and chain modifiers. The premix is typically vigorously agitated to form an emulsion at ambient temperature if water is an ingredient. The reactor is also prepared for polymerization by addition of water, initiator, monomer (if added to the reactor), optionally buffering agents, and other ingredients. The reactor and its contents can be preheated. The premix is metered to the reactor over a period of 0.5 to 10 or more hours, preferably 1 to 4 hours. As soon as the polymerization starts, the temperature of the reactor increases. A cold water or other type of cooling jacket around the reactor can be used to control the polymerization temperature, preferably at 30°C. to 90°C.

The latex obtained is typically treated or processed to reduce residual monomers and the pH is adjusted to whatever value is desired. The latex is then often filtered through a cheesecloth or filter sock and stored. The stored latex has a total solids content of from 10 to 68%, and more typically from 40% to 60%.

It should be understood that although the best results were obtained when all or at least one-half or more of the unsaturated dicarboxyclic acid was placed in the reactor initially, an unexpected improvement in the balance of the physical properties of the novel polymers was also obtained when over one-half or all of the acid is placed in the premix, as long as the acid used is the unsaturated dicarboxylic acid described herein. The use of unsaturated monocarboxylic acids, such as acrylic acid and methacrylic acid, did not work to produce the unique balance of properties in the novel polymer. Further, when acrylic acid or methacrylic acid was placed initially all in the reactor, the reaction mixture gelled or coagulated, despite attempts to prevent this by adding water during the polymerization.

As already described, in a preferred process of this invention, the unsaturated dicarboxylic acid is all added initially to the reactor, unlike prior art processes in which all of the monocarboxylic acid is typically added to the premix. Addition of large amounts of the unsaturated dicarboxylic acid to the reactor initially requires adjustments in the polymerization recipe in order to obtain a latex with optimum properties. For example, placing all of the unsaturated dicarboxylic acid into the reactor without making any other changes in the polymerization recipe or process can result in a larger particle size latex. The reason for this is believed to be that the dicarboxylic acid reduces the efficiency of the initiator in the reactor and/or causes destabilization of forming particles in the reactor, which, in turn, can affect the particle size of the latex polymer.

It is known in acrylic latex technology that the amount of the surfactant in the reactor can substantially affect the particle size of the latex. Hence, by increasing the amount of surfactant used, the particle size of the latex can be reduced. Since the presence of the unsaturated dicarboxylic acid in the reactor can have the affect of increasing the particle size, an upward adjustment in the amount of surfactant (and/or initiator) used can compensate for this effect.

The latexes disclosed herein have typical colloidal properties. They are anionically stabilized, have a pH of from 1 to 6 as prepared, have a particle size in the range of 100 to 500 nm (1000 to 5000 angstroms), and exhibit good mechanical stability when their pH is raised above neutral.

One of the most unique properties of the polymers of this invention is their excellent hysteresis characteristics. The novel polymers prepared herein have very tight hysteresis curves. The tighter a hysteresis curve, the more resilient the polymer. Also, the tighter the hysteresis curve, the less heat will be generated on stretching or working of the polymer.

The percent hysteresis loss of polymers were determined from the polymer's hysteresis curve using the following procedure. Dumbell samples of the raw polymer having 178-254 µm (7 to 10 mils) thickness were prepared from the latex using a draw bar. The cast films were air-dried then heated at 149°C (300°F). for 5 minutes. By raw polymer it is

meant that no compounding ingredients such as fillers, pigments and plasticizers were added, and no curative ingredients were added. The samples were placed in an Instron tensile testing machine and elongated to 200% elongation at a speed of 50.8 cm (20 inches)/minute. The sample was then retracted at 50.8 cm (20 inches)/minute to its original position (making one cycle), and then elongated and retracted again until five cycles were completed. The tensile/elongation (i.e. hysteresis) curves for each cycle were recorded. The percent hysteresis loss measurements were performed in each case on the recorded data for the second cycle. In a hysteresis graph of force versus elongation, the area under the curve of the figure described by the second stretch of the polymer to 200% elongation represents the amount of work energy needed to produce the elongation ($E_A$). The area of the figure described when the polymer is retracted in the cycle represents the work energy exerted by the polymer in returning to its original position ($E_B$). A perfectly resilient polymer which exhibits no heat or other energy losses would have a hysteresis curve wherein $E_A$ would equal $E_B$, i.e. the two curves would lie on top of each other. The deviation from this ideal condition is a measure of the polymer's hysteresis loss. A gummy polymer would have a very high percent hysteresis loss.

The percent hysteresis loss of the polymers was determined by the following formula:

$$\text{Percent Hysteresis Loss} = \frac{E_A - E_B}{E_A} \times 100\%.$$

The polymers prepared from the most preferred unsaturated dicarboxylic acids, copolymerizable monomers, and crosslinking monomers and prepared by the preferred process exhibit a percent hysteresis loss of below 15 percent.

The novel polymers have other properties which make them unique. They are soft, yet rubbery and tough. Their ultimate raw polymer tensile strength is at least 2.07 MPa (300 psi) and ultimate percent elongation is at least 350%, as measured on raw polymer films cast with a draw bar, air-dried and heated for 5 minutes at 149°C (300°F). A way of observing the good balance of tensile strength and elongation exhibited by the polymers of this invention is to calculate their "TxE Product", which is simply the figure obtained by multiplying the polymer's ultimate tensile strength by its percent elongation at break. The figure is reported to the nearest 1000. The TxE Product is an estimate of the overall toughness of the polymer. The TxE Product of the novel polymers is at least 140,000, and more preferably at least 200,000. The TxE Product for the novel polymers made from the most preferred monomers using the most preferred process is at least 250,000.

## EXAMPLES

In the following experiments, except as stated otherwise, the latex was prepared by polymerizing a monomer mix of 93 to 97 parts by weight parts of the copolymerizable monomer, 2 to 4.5 weight parts of the stated acid, and 1 to 3 weight parts of the crosslinking monomer. In comparative experiments where no acid was used, the amount of copolymerizable monomer was increased accordingly. The premix was prepared in a separate tank by mixing demineralized water, sodium lauryl sulfate as the surfactant, the crosslinking monomer, and the copolymerizable monomer(s). All or part of the acid was placed in the premix or the reactor, as indicated. The reactor initially contained demineralized water, sodium lauryl sulfate, and sodium persulfate. The premix was metered into the reactor over a period of about 1.5 to about 2.5 hours, during which time the temperature in the reactor was controlled at 70°C. to 80°C.

After commencement of the metering of the premix to the reactor, in some cases a second initiator system was added to the reactor. The second initiator system consisted of sodium persulfate, sodium lauryl sulfate, and ammonium carbonate in demineralized water. The second initiator was metered into the reactor over a period of 3.5 hours. At times, an initiator booster was merely slugged into the reactor rather than metered in. When the reaction was completed, the latex in the reactor was allowed to stand for about 1.5 hours at 75°C. and Was then cooled to 40°C. At this point, the latex was stripped, cooled to 30°C., its pH was adjusted with ammonia to about 4.5 pH, and it was filtered through cheesecloth and stored.

Following the above general procedures, three variations of reaction conditions were actually employed. In Variation A, the reaction temperature was 80°C., the premix metering time was 2 hours, an initiator booster containing 0.05 part of sodium persulfate was added after 2 hours, and the amount of sodium lauryl sulfate used was 0.05 weight part in the reactor and 0.95 weight part in the premix. Variation B was like Variation A except that the reaction temperature was 75°C. In Variation C, the reaction temperature was 70°C., 0.35 weight part of sodium persulfate initiator was in the reactor, a second initiator of 0.15 part of sodium persulfate and 0.05 part of sodium lauryl sulfate was metered in over 3.5 hours, and the amount of sodium lauryl sulfate in the reactor was 0.4 weight part and in the premix was 0.6 weight part.

The raw polymer films were prepared in the following manner. First, the latex was neutralized by adjusting the pH of the latex to between 7 and 8 with ammonia. Thickener was added to the latex, as necessary, to raise its viscosity to about 500 mPa·s (cps) so that a level film could be obtained. A latex film was deposited on a polyethylene backing using a draw bar so as to yield a dry film of 178 to 254 µm (7 to 10 mils) thickness, and the latex film was dried at room temperature for about 24 hours. The polymer film was then peeled from the backing, dusted with talc if necessary for easier handling, and heated for 5 minutes at 300°F (149°C). The test specimens were prepared and tested using the

following procedure. A dumbell shaped test specimen was prepared from the polymer film and placed in an Instron tensile tester at a 2.54 cm (1") jaw spacing. The jaws were separated at a speed of 50.8 cm (20 inches)/minute. Elongation was measured using a 1.27 cm (0.5 inch) benchmark. Each data point given in the examples represents an average of three separate measurements.

EXAMPLE 1 (not according to the invention)

This example demonstrates the preparation of a latex and shows a comparison of the properties of the polymer with those of polymers containing no acid, acrylic acid, or methacrylic acid in the polymer. Only the polymer prepared from the latex containing polymerized itaconic acid is representative of the invention. The other samples were prepared and are presented for comparison purposes only. All of the latexes were prepared with 2 parts by weight of N-methylol acrylamide as the crosslinking monomer, and using the process described above as Variation B. The acid, if used, was placed all in the premix and the premix was metered into the reactor. All reaction conditions and procedures were identical in these tests except for the particular acid used, if any. Ultimate tensile strength and percent elongation tests were performed on film samples of the raw polymers, which samples were prepared as described above. The results are given in Table A below:

TABLE A

| | No Acid | Acrylic Acid | Methacrylic Acid | Itaconic Acid |
|---|---|---|---|---|
| Tensile Strength, MPa (psi) | 1.43 (207) | 2.41 (350) | 2.27 (330) | 4.78 (693) |
| Elongation, % | 260 | 343 | 390 | 380 |
| TxE Product | 54000 | 120000 | 129000 | 263000 |
| Percent Hysteresis Loss | 2.2 | 18.1 | 22.9 | 18.9 |

It is apparent from the above data that the polymer made using itaconic acid (IA) has a superior balance of tensile strength and elongation and percent hysteresis loss. The polymer containing polymerized itaconic acid (IA) had a tensile strength of 4.78 MPa (693 psi) an ultimate elongation of 380%, and a TxE Product of 263000, whereas the corresponding results for acrylic acid (AA) were 2.41 MPa (350 psi), 390%, and 120000, and for methacrylic acid (MAA) were 2.27

MPa (330 psi) and 390%, and 129000 respectively. For the polymer prepared containing no acid at all, the tensile strength was only 1.43 MPa (207 psi), elongation was 260%, and the TxE Product was only 53800. The data shows that the polymer of the invention has a good balance of tensile strength and elongation and low hysteresis loss.

EXAMPLE 2

For purposes of further comparison, the properties of a polymer of the invention were compared to properties of some commercial polymers. The polymer used herein is similar to the polymer prepared in Example 1 above except that, in this case, all of the itaconic acid was placed initially into the reactor (no itaconic acid was in the premix). The commercial polymers are Hycar® 2671 (Acrylic A), Hycar® 2673 (Acrylic B), and an acrylic polymer known as Rhoplex® TR934 sold by Rohm and Haas (Acrylic C). Results are given in Table B below:

TABLE B

| | Novel Polymer | Acrylic A | Acrylic B | Acrylic C |
|---|---|---|---|---|
| Tensile, MPa (psi) | 5.20 (755) | 4.58 (665) | 2.80 (407) | 4.25 (617) |
| Elongation, % | 608 | 610 | 1483 | 433 |
| TXE Product | 459000 | 406000 | 636000 | 267000 |
| Percent Hysteresis Loss | 12.8 | 22.0 | 36.4 | 12.5 |
| Tg, °C | -44 | -11 | -15 | -28 |

The data shows that the novel polymer of the invention gives a unique balance of good tensile strength and elongation and low hysteresis loss. The balance of tensile and elongation properties and hysteresis loss of the novel polymer were actually better than most of those properties of the "harder" acrylic polymers, yet the Tg of the novel polymer was considerably lower than such polymers.

EXAMPLE 3 (not according to the invention)

This example shows the preparation and testing of polymers wherein the latexes were prepared using Variation A and all of the unsaturated dicarboxylic acid was placed in the premix. The following monomers were charged on the following weight basis: 4.5 parts of the stated acid, 1.0 part N-methylol acrylamide, and 94.5 parts n-butyl acrylate.

The film samples were prepared from the polymers and tested as described above. As a comparison, a polymer was also prepared using the monocarboxylic acid, acrylic acid, in place of itaconic acid. The acrylic acid was also placed all in the premix. Results of the tests are given in Table C below.

TABLE C

| | AA all in Premix | IA all in Premix |
|---|---|---|
| Tensile, MPa (psi) | 2.14 (310) | 3.76 (546) |
| Elongation % | 493 | 553 |
| TxE Product | 153000 | 317000 |
| Percent Hysteresis Loss | 23.1 | 19.6 |

The tensile strength, elongation, TxE Product, and hysteresis loss for the polymer made with acrylic acid (AA) in the premix was 2.14 MPa (310 psi), 493%, 153000, and 23.1% respectively. When itaconic acid (IA) was used all in the premix, thereby making a polymer of this invention, the tensile strength, elongation, TxE Product, and hysteresis loss was 3.76 MPa (546 psi), 553%, 317000, and 19.6% respectively. When the experiment with the itaconic acid all placed in the premix was repeated, the results were even better, with a tensile strength of 4.62 MPa (670 psi), and elongation of 573%, a TxE Product of 366000, and a percent hysteresis loss of 17.5%. All of the polymers had a Tg of about -44°C. It is apparent that the use of itaconic acid (IA) in place of acrylic acid (AA) results in a polymer having a superior balance of tensile strength and elongation properties and low percent hysteresis loss at a low Tg.

EXAMPLE 4

An experiment was performed wherein the itaconic acid was placed all initially in the reactor. This experiment used the same monomers and parts by weight, and same polymerization and test conditions given in Example 3 above. This polymer had a tensile strength of 3.49 MPa (507 psi), and elongation of 753%, a TxE Product of 382000, and a percent hysteresis loss of 19.8%.

With no buffers, the latex prepared in this Example 3 had a pH of about 1.9. As mentioned before, it is believed that the use of all of the unsaturated dicarboxylic acid initially in the reactor has the effect of reducing initiation efficiency of the polymerization and/or destabilizing the forming particles, which can result in a latex which has a larger particle size than when the acid is placed in the premix. The reduction in initiation efficiency can be overcome by increasing the amount of the surfactant or initiator, or both. This was demonstrated by conducting an experiment in which the level of the surfactant used in the reactor was increased from 0.05 weight part to 0.5 weight part, with all other conditions remaining the same. By increasing the amount of surfactant, the preparation of the latex was more nearly optimized. The data obtained on the film of the polymer prepared in this manner shows that the tensile strength of the polymer increased to 5.33 MPa (773 psi), the elongation dropped to 647%, the TxE Product increased to 500000, and the percent hysteresis loss dropped to 14.9%. This indicates a different balance of properties than obtained using the lesser amount of surfactant. This balance of properties may be preferred in some uses.

EXAMPLE 5

This example demonstrates the superior results that can be obtained by preparing the latexes by the preferred process wherein all or at least one-half of the unsaturated dicarboxylic acid is placed initially in the reactor. The data in Table D gives properties for films made from latexes wherein the amount of itaconic acid (IA) placed in the reactor ranged from all placed into the reactor initially to all of the itaconic acid placed in the premix. The latexes were prepared with 2

parts by weight of N-methylol acrylamide as the crosslinking monomers, and using process procedure Variation A. Results are given in Table D below.

TABLE D

| | 4 parts IA in Reactor | 3 parts IA in Reactor 1 part IA in Premix | 2 parts IA in Reactor 2 parts IA in Premix | 1 part IA in Reactor 3 parts IA in Premix *) | 4 parts IA in premix*) |
|---|---|---|---|---|---|
| Tensile, MPa (psi) | 5.20 (755) | 5.81 (843) | 6.14 (890) | 4.44 (645) | 4.78 (693) |
| Elongation, % | 603 | 533 | 517 | 380 | 380 |
| TxE Product | 459000 | 449000 | 460000 | 245000 | 263000 |
| Percent Hysteresis Loss | 12.8 | 12.6 | 13.6 | 14.8 | 18.9 |

*) not according to the invention

When all 4 weight parts of the itaconic acid are placed initially in the reactor, tensile strength, elongation, TxE Product, and hysteresis loss were 5.46 MPa (792 psi), 688%, 459000, and 12.8% respectively. As more of the itaconic

acid was placed in the premix, the polymer properties changed, especially in the percent elongation and percent hysteresis loss. However, no matter how the novel polymers were prepared, i.e. by the process wherein all of the itaconic acid was placed in the reactor, in the premix, or the itaconic acid was split between the two, the polymers still show a superior balance of properties as compared to similar polymers made using acrylic acid or methacrylic acid. See Table A for a comparison.

EXAMPLE 6

The suitability of using unsaturated dicarboxylic acids other than itaconic acid is demonstrated in this Example. The polymers were prepared using 2 parts by weight of n-methylol acrylamide as the crosslinking monomer, and using the process procedure Variation B where all 4.0 weight parts of the defined acid was placed initially into the reactor. The unsaturated dicarboxylic acids employed were itaconic acid (IA), fumaric acid (FA), maleic acid (MA), and citraconic acid (CA). An attempt was also made to prepare comparative latexes and polymers which would contain no acid, acrylic acid (AA) or methacrylic acid (MAA) in place of the unsaturated dicarboxylic acid. Results are given in Table E below:

TABLE E

| | Itaconic Acid | Fumaric Acid *) | Maleic Acid *) | Citraconic Acid *) | Acrylic Acid | Methacrylic Acid | No Acid |
|---|---|---|---|---|---|---|---|
| Tensile, MPa (psi) | 5.20(755) | 3.13(454) | 3.03(440) | 2.25(327) | gelled | gelled | 1.43(207) |
| Elongation, % | 603 | 427 | 467 | 637 | --- | --- | 260 |
| TxE Product | 459000 | 233000 | 205000 | 208000 | --- | --- | 54000 |
| Percent Hysteresis Loss | 12.8 | 18.4 | 18.0 | 19.9 | --- | --- | 12.2 |

*) comparative

Both experiments wherein acrylic acid (AA) or methacrylic acid (MAA) was placed all in the reactor resulted in a gelled latex during polymerization, even though an attempt was made to prevent this by adding water to the reactor during polymerization. With the itaconic acid (IA) in the reactor, the tensile strength of the polymer was 5.20 MPa (755 psi), elongation was 603%, the TxE Product was 459000, and the percent hysteresis loss was a low 12.8%. The use of fumaric acid (FA) in the process produced a polymer having a somewhat lower tensile strength and elongation and higher percent hysteresis low. The use of maleic acid (MA) or citraconic acid (CA) as the unsaturated dicarboxylic acid yielded polymers having lower tensile strengths and good elongations. The TxE Products and percent hysteresis loss

of these polymers was good. With no acid, the tensile strength of the polymer was only 1.43 MPa (207 psi), its elongation was only 260%, and the TxE Product was a very low 54000.

Certain of the above experiments were repeated wherein the unsaturated dicarboxylic acid was placed all in the premix (none initially in the reactor). The polymer prepared using maleic acid in the premix had a tensile strength of 2.42 MPa (351 psi), an elongation of 357%, and a TxE Product of 126000. The polymer prepared using citraconic acid in the premix had a tensile strength of 3.21 MPa (321 psi), an elongation of 553%, and a TxE Product of 178000. Both of these results are better than those obtained when using acrylic acid in the reactor (as above) or in the premix (see Table A).

EXAMPLE 7

This example demonstrates the use of other copolymerizable monomers in the preparation of the latexes and polymers of this invention. The procedures used were the same as those used in Example 6 wherein the itaconic acid was placed all initially into the reactor. A portion of the n-butyl acrylate in the premix was replaced with one or more of the indicated higher Tg yielding copolymerizable monomers in the amounts shown. Results are given in Table F below:

TABLE F

| | 5 PHR ST 5 PHR AN *) | 10 PHR VAC | 10 PHR MMA |
|---|---|---|---|
| Tensile, MPa (psi) | 5.78(838) | 4.67(678) | 6.50(943) |
| Elongation, % | 670 | 630 | 560 |
| TxE Product | 562000 | 427000 | 529000 |
| Percent Hysteresis Loss | 17.8 | 13.8 | 14.5 |
| Calculated Tg, °C | -25 | -36 | -29 |

*) comparative

The above results demonstrate that the latexes and polymers can be readily prepared using a large range of copolymerizable monomers, as long as the Tg of the final polymer is between about -20°C. and about -60°C., and an acrylate monomer is present as the major copolymerizable monomer. Of course, the presence of one or more other copolymerizable monomers, particularly "harder" monomers, can affect the physical properties of the polymers made from the corresponding latexes. For example, with 5 weight parts of styrene (ST) and 5 weight parts of acrylonitrile (AN) used in place of a corresponding amount of n-butyl acrylate, the tensile strength of the polymer was 5.78 MPa (838 psi) and elongation was 670%. Using 10 weight parts of vinyl acetate (VAC), the polymer tensile strength was 4.67 MPa (678 psi) and elongation was 630%. With 10 weight parts of methyl methacrylate (MMA), polymer tensile strength was 6.50 MPa (943 psi) and elongation was 560%. In all three cases, the TxE Products were very high and the percent hysteresis loss was within the stated range.

A very low Tg polymer was prepared using the same procedure as given above using 94 weight parts of 2-ethyl hexyl acrylate (2-EHA) as the sole copolymerizable monomer. The polymer was weak, having a tensile strength of 1.58 MPa (230 psi), an elongation of 980%, and a Tg of -65.5°C. This polymer did not meet the necessary criteria of the polymers. This experiment shows that a choice of copolymerizable monomer(s) which takes the Tg of the polymer outside of the stated Tg range, results in a polymer that does not have the unique balance of properties described herein.

EXAMPLE 8

This example demonstrates the use of other crosslinking monomers in the preparation of the latexes and polymers. The crosslinking monomer is used in each experiment at 2.0 weight parts in the premix. The itaconic acid was used at 4 parts by weight and was placed all initially in the reactor. The process procedure used was Variation B. Results are given in Table G below:

TABLE G

| | NMA *) | NMMA | MAGME |
|---|---|---|---|
| Tensile, MPa(psi) | 5.72 (830) | 6.46 (937) | 6.27 (910) |
| Elongation, % | 773 | 360 | 1055 |
| TxE Product | 642000 | 337000 | 960000 |
| Percent Hysteresis Loss | 15.4 | 13.9 | 14.2 |

*) comparative

The first column of data in Table G snows data from a latex polymerization wherein N-methylol acrylamide (NMA) was used as the crosslinking monomer. The polymer prepared using N-methylol methacryomide (NMMA) as the crosslinking monomer had a higher tensile strength 6.46 MPa (937 psi) but lower elongation (360%). When methyl acrylamidoglycolate methyl ether (MAGME) was used as the crosslinking monomer, the polymer tensile strength was 6.27 MPa (910 psi), elongation was 1055%, and an exceptionally high TxE Product was obtained.

From Table G, it is readily seen that a broad range of crosslinking monomers are suitable for use in this invention.

EXAMPLE 9

A series of latexes were prepared in which the amount of itaconic acid (IA) and the amount of N-methylol acrylamide (NMA) were varied. The copolymerizable monomer used was n-butyl acrylate at 93 to 97 parts by weight. The itaconic acid was placed all initially in the reactor. The initiator used was sodium persulfate. Process procedure C was employed. The results of the tests on the polymers are given in Table H below.

TABLE H

| Run | IA (parts) | NMA (parts) | Initiator In Reactor (parts) | Tensile Strength MPa (psi) | Elongation (%) | TxE Product |
|---|---|---|---|---|---|---|
| 1 | 4 | 2 | 0.35 | 4.93 (715) | 607 | 434000 |
| 2 | 4 | 2 | 0.35 | 4.32 (627) | 573 | 359000 |
| 3 | 2 | 2 | 0.35 | 4.89 (710) | 420 | 298000 |
| 4 | 3 | 2 | 0.1 | 4.50 (653) | 577 | 377000 |
| 5 | 2 | 1 | 0.1 | 3.60 (523) | 587 | 307000 |
| 6 | 3 | 1 | 0.35 | 3.69 (536) | 563 | 302000 |
| 7 | 4 | 3 | 0.35 | 4.05 (587) | 603 | 354000 |
| 8 | 3 | 3 | 0.1 | 4.15 (602) | 500 | 301000 |

The above data shows that the polymers can be readily prepared using various amounts of the unsaturated dicarboxylic acid and the crosslinking monomer.

## Claims

1. A process for preparing a latex comprising water, 0.1 to 10 parts by weight of a surfactant, and a polymer having a Tg of from -20°C to -60°C, a percent hysteresis loss of less than 15%, and a raw polymer tensile strength of at least 2.068 MPa (300 psi) and an elongation of at least 350 percent, comprising interpolymerized units of (a) from 1 to 20 weight parts of at least one unsaturated dicarboxylic acid containing 4 to 10 carbon atoms (b) from 70 to 99 weight parts of at least one copolymerizable monomer of which a majority is an acrylate monomer(s), and (c) optionally, from 0.1 to 10 weight parts of a crosslinking monomer, all weights based on 100 parts by weight total of all monomers, which process includes the step of metering into a reactor a premix which substantially comprises water, at least one copolymerizable monomer, optionally a crosslinking monomer(s), surfactant and up to one-half of the total amount of at least one unsaturated dicarboxylic acid, wherein the reactor contains water, initiator, and at least one-half of the total amount of at least one unsaturated dicarboxylic acid, and subsequently conducting polymerization in the reactor at a temperature from 0°C to 100°C.

2. A process of claim 1, wherein a crosslinking monomer is used, which monomer is selected from the group consisting

of N-alkylol acrylamides containing 4 to 18 carbon atoms, lower alkyl acrylamidoglycolate lower alkyl ethers containing 7 to 20 carbon atoms and mixtures thereof; and said dicarboxylic acid is selected from the group consisting of citraconic acid, glutaconic acid, fumaric acid, maleic acid, itaconic acid and mixtures thereof.

**3.** A process of claim 2, wherein said copolymerizable monomer is n-butyl acrylate, said unsaturated dicarboxylic acid is itaconic acid, and said crosslinking monomer N-methylol acrylamide.

**4.** A process for preparing a latex of claim 3, wherein all of the unsaturated dicarboxylic acid is added initially to the reactor, and the premix is devoid of the unsaturated dicarboxylic acid.

**Patentansprüche**

**1.** Verfahren zur Herstellung eines Latex, der Wasser, 0,1 bis 10 Gew.-% eines Tensids und ein Polymer mit einer Tg (Glasübergangstemperatur) von -20 °C bis -60 °C, einem prozentualen Hysteresis-Verlust von weniger als 15 % und einer Rohpolymer-Zugfestigkeit von wenigstens 2,067 MPa (300 psi) und einer Dehnung von wenigstens 350 % umfaßt, umfassend interpolymerisierte Einheiten aus (a) 1 bis 20 Gew.-Teilen wenigstens einer ungesättigten, 4 bis 10 Kohlenstoffatome enthaltenden Dicarbonsäure, (b) 70 bis 99 Gew.-Teilen wenigstens eines copolymerisierbaren Monomers, von dem eine Mehrheit (ein) Acrylat-Monomer(e) ist (sind) , und (c) gegebenenfalls 0,1 bis 10 Gew.-Teile eines vernetzenden Monomers, wobei alle Gewichte auf eine Gesamtmenge von 100 Gew.-Teilen aller Monomere bezogen sind, wobei das Verfahren den Schritt des abgemessenen Zugebens einer Premix-Masse, die im wesentlichen Wasser, wenigstens ein copolymerisierbares Monomer, gegebenenfalls (ein) vernetzende(s) Monomer(e), ein Tensid und bis zur Hälfte der Gesamtmenge wenigstens eine ungesättigte Dicarbonsäure umfaßt, in einen Reaktor, wobei der Reaktor Wasser, Initiator und wenigstens eine Hälfte der Gesamtmenge wenigstens einer ungesättigten Dicarbonsäure enthält, und anschließend das Durchführen der Polymerisation in dem Reaktor bei einer Temperatur von 0 °C bis 100 °C umfaßt.

**2.** Verfahren nach Anspruch 1, wobei ein vernetzendes Monomer verwendet wird, wobei das Monomer aus der aus 4 bis 18 Kohlenstoffatome enthaltenden N-Alkylolacrylamiden, 7 bis 20 Kohlenstoffatomen enthaltenden Niederalkylacrylamidoglycolat-Niederalkylethern und deren Mischungen bestehenden Gruppe ausgewählt wird, und wobei die Dicarbonsäure aus der aus Citraconsäure, Glutaconsäure, Fumarsäure, Maleinsäure, Itaconsäure und deren Mischungen bestehenden Gruppe ausgewählt wird.

**3.** Verfahren nach Anspruch 2, wobei das copolymerisierbare Monomer n-Butylacrylat ist, die ungesättigte Dicarbonsäure Itaconsäure ist und das vernetzende Monomer N-Methylolacrylamid ist.

**4.** Verfahren zur Herstellung eines Latex nach Anspruch 3, wobei die gesamte ungesättigte Dicarbonsäure zu Beginn in den Reaktor gegeben wird und die Premix-Masse frei von der ungesättigten Dicarbonsäure ist.

**Revendications**

**1.** Procédé pour préparer un latex comprenant de l'eau, 0,1 à 10 parties en poids d'un tensioactif, et un polymère ayant une Tg allant de -20°C à -60°C, un pourcentage de perte d'hystérésis inférieur à 15 %, et une résistance à la traction du polymère brut d'au moins 2,068 MPa (300 psi) et un allongement d'au moins 350 pourcent, comprenant des unités interpolymérisées (a) de 1 à 20 parties en poids d'au moins un acide dicarboxylique insaturé contenant de 4 à 10 de carbone (b) de 70 à 99 parties en poids d'au moins un monomère copolymérisable dont une majorité est constituée de monomère(s) acrylate, et (c) éventuellement, de 0,1 à 10 parties en poids d'un monomère de réticulation, tous les poids étant basés sur un total de 100 parties en poids de tous les monomères, ledit procédé comprenant l'étape de mesure dans un réacteur d'un prémélange qui comprend essentiellement de l'eau, au moins un monomère copolymérisable, éventuellement un (des) monomère(s) de réticulation, un tensioactif et jusqu'à la moitié de la quantité totale d'au moins un acide dicarboxylique insaturé, dans lequel le réacteur contient de l'eau, un agent d'amorçage, et au moins la moitié de la quantité totale est constituée d'au moins un acide dicaboxylique insaturé et ultérieurement la polymérisation dans le réacteur à une température allant de 0°C à 100°C.

**2.** Procédé selon la revendication 1, dans lequel on utilise un monomère de réticulation, ledit monomère est choisi dans le groupe constitué de N-alkylol-acrylamides contenant de 4 à 18 atomes de carbone, d'éthers d'alkyle inférieur d'acrylamidoglycolate d'alkyle inférieur, contenant de 7 à 20 atomes de carbone et des mélanges de ceux-ci ; et

ledit acide dicarboxylique est choisi dans le groupe constitué de l'acide citraconique, de l'acide glutaconique, de l'acide fumarique, de l'acide maléique, de l'acide itaconique et de mélanges de ceux-ci.

**3.** Procédé selon la revendication 2, dans lequel ledit monomère copolymérisable est un acrylate de n-butyle, ledit acide dicarboxylique insaturé est l'acide itaconique, et ledit monomère de réticulation est le N-méthylol-acrylamide.

**4.** Procédé pour préparer un latex selon la revendication 3, dans lequel la totalité de l'acide dicarboxylique insaturé est ajoutée initialement dans le réacteur et le prémélange est dépourvu de l'acide dicarboxylique insaturé.